# EUROPÄISCHE PATENTANMELDUNG

(11) **EP 2 105 077 A1**
(43) Veröffentlichungstag der Anmeldung: **30.09.2009**
(21) Anmeldenummer: 09155350.3
(22) Anmeldetag: 17.03.2009
(51) Int. Cl.: A47J 31/46

(54) **Leitung zum Durchleiten von Wasser**

(30) Priorität: 28.03.2008 DE 202008004237 U
(71) Anmelder: MELITTA HAUSHALTSPRODUKTE GmbH & Co. Kommanditgesellschaft, D-32427 Minden (DE)
(72) Erfinder: Graue, Rolf, 32469, Petershagen (DE); Winkel-Bilinksi, Wilfried, 32427, Minden (DE)
(74) Vertreter: Dantz, Jan Henning

(57) **Zusammenfassung**

Eine Leitung zum Durchleiten von Wasser oder Dampf, insbesondere für ein Haushaltsgerät, umfasst eine Verjüngung (3), deren Querschnitt kleiner ist als der Querschnitt der Leitung (2) an der Zulaufseite, wobei in der Leitung (2) an der Zulaufseite ein Filter (5) angeordnet ist, dessen Öffnungen kleiner sind als der Querschnitt der Verjüngung (3). Dadurch kann ein Verstopfen der Leitung (2) mit Schmutzpartikeln vermieden werden.

## Beschreibung

Die vorliegende Erfindung betrifft eine Leitung zum Durchleiten von Wasser oder Dampf, insbesondere für ein Haushaltsgerät, mit einer Verjüngung, deren Querschnitt kleiner ist als der Querschnitt der Leitung an der Zulaufseite.

Es gibt Haushaltsgeräte, wie Kaffeeautomaten, bei denen Wasser erhitzt und durch eine Brühkammer geleitet wird, um anschließend ein fertiges Getränk auszugeben. Beim Benutzen oder Reinigen der Heizeinrichtung können sich dabei Kaltpartikel oder Fremdstoffe lösen, was dazu führen kann, dass sich nachfolgende Düsen oder Folgeaggregate zusetzen und verstopfen. Dadurch wird der Querschnitt durch die Kalkpartikel oder die Fremdstoffe so verjüngt, dass die Düsen oder Folgeaggregate nicht mehr richtig durchströmt werden können.

Es ist daher Aufgabe der vorliegenden Erfindung, bei einer Leitung zum Durchleiten von Wasser oder Dampf ein Verstopfen einer nachfolgenden Verjüngung zu vermeiden.

Diese Aufgabe wird mit einer Leitung mit den Merkmalen des Anspruches 1 gelöst.

Erfindungsgemäß ist in der Leitung an der Zulaufseite vor der Verjüngung ein Filter angeordnet, dessen Öffnungen kleiner sind als der Querschnitt der Verjüngung. Dadurch wird gewährleistet, dass sich größere Kalkpartikel oder Fremdstoffe an dem Filter mit vergleichsweise großer Filteroberfläche ansammeln und die Verjüngung nicht mehr verstopfen können. Sofern Kalkpartikel in dem Filter angesammelt werden, können diese sich später beim Durchströmen auflösen, insbesondere auch bei einem speziellen Reinigungsvorgang. Dadurch können die großen Kalkartikel unschädlich entsorgt werden.

Gemäß einer bevorzugten Ausgestaltung der Erfindung ist der Filter dauerhaft in der Leitung montiert.

Der Filter kann dabei durch Rast- oder Klemmmittel in der Leitung gehalten sein. Dadurch kann der Filter auf einfache Weise in die Leitung eingesetzt werden und es sind keine Werkzeuge erforderlich.

Vorzugsweise ist der Filter aus einem Metalldraht ausgebildet, so dass der Filter für den Lebensmittelbereich eingesetzt werden kann. Zudem ist der Filter dann auch beständig gegen Heißdampf.

Für eine gute Filterwirkung kann der Filter spiralförmig ausgebildet sein, wobei die Spalte zwischen den Spiralen die Filteröffnung bilden. Dabei kann der Filter kegelförmig in der Leitung angeordnet sein, so dass die wirksame Filteroberfläche relativ groß ist, da die Länge des Filters als Filterfläche genutzt werden kann. Der Öffnungswinkel des Kegels des Filters kann dabei in einem Bereich zwischen 5 und 20° liegen. Dabei kann ein spitzes Ende des Filters in Strömungsrichtung hinten angeordnet sein, so dass sich Fremdstoffpartikel in dem Filter ansammeln können. Ein solcher Filter lässt sich auch in bestehende Systeme nachrüsten und er kann in nahezu allen Schläuchen und Hülsen mit geeignetem Durchmesser eingesetzt werden.

Vorzugsweise ist der Filter zwischen einer Heizeinrichtung und der Verjüngung angeordnet. Denn gerade beim Durchströmen der Leitung mit heißem Wasser besteht das Problem von Kalkpartikeln, die sich von den Wänden der Leitung lösen. Die Verjüngung kann dabei vorzugsweise als Auslauf eines Getränkeautomaten ausgebildet sein, beispielsweise als Auslaufdüse oder Düse vor einer Brühkammer.

Die Erfindung wird nachfolgend anhand eines Ausführungsbeispiels mit Bezug auf die beigefügte Zeichnung näher erläutert. Es zeigen:
- Figur 1: eine schematische Ansicht einer erfindungsgemäßen Leitung und
- Figur 2: eine Detailansicht des Filters in der Leitung.

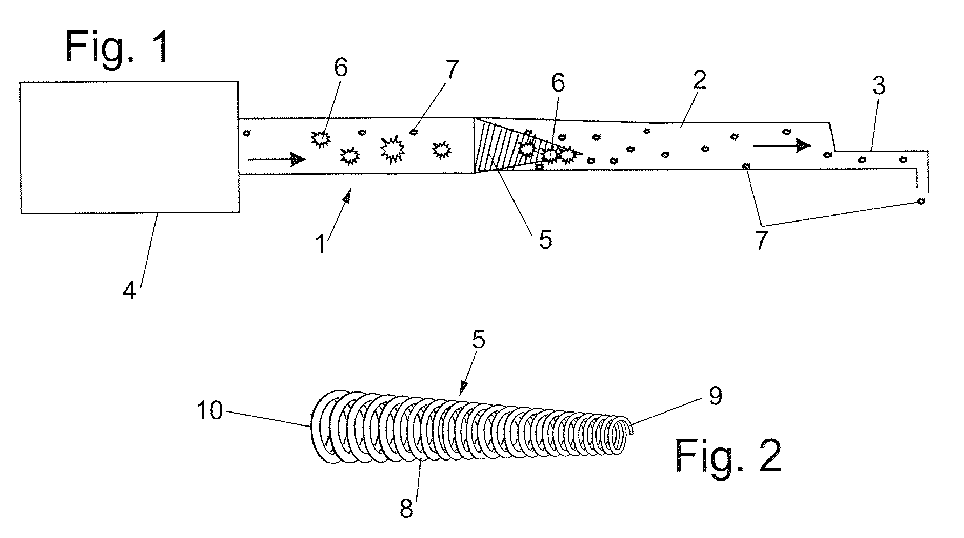

In Figur 1 ist schematisch eine erfindungsgemäße Leitung zum Durchleiten von Wasser, insbesondere an einem Haushaltsgerät, wie einem Kaffeeautomaten 1 dargestellt. Eine rohrförmige Leitung 2 umfasst eine Verjüngung 3, die einen geringeren Querschnitt als die Leitung 2 an der Zulaufseite aufweist. Die Leitung 2 an der Zulaufseite kann dabei als Schlauch, Rohr aus Metall oder Kunststoff oder anderer Hohlkörper ausgebildet sein, der mit Wasser durchströmt wird, wobei am Ende die Verjüngung 3 in Form einer Düse oder eines Auslaufes angeordnet ist. Vor der Leitung 2 ist eine Heizeinrichtung 4 angeordnet, die beispielsweise kaltes Wasser erhitzt, damit dieses zur Zubereitung von Kaffee oder Tee eingesetzt werden kann.

In der Leitung 2 ist an der Zulaufseite ein Filter 5 vorgesehen, mittels dem größere Kalkpartikel 6 herausgefiltert werden können, damit diese nicht zu der Verjüngung 3 gelangen. Kleinere Partikel 7 können dabei den Filter 5 durchströmen und zu der Verjüngung 3 gelangen, da diese so klein sind, dass keine Verstopfung der Verjüngung 3 erfolgen kann. Größere Partikel 6 hingegen, insbesondere Kalkpartikel, lagern sich in dem spiralförmigen Filter 5 an und können dann beim weiteren Durchströmen aufgelöst werden. Zudem kann ein Auflösen der Partikel 6 auch bei einem nachfolgenden Reinigungsvorgang mit Reinigungsmittel erfolgen.

In Figur 2 ist der Filter im Detail dargestellt. Der Filter 5 besteht aus einem Metalldraht 8 und ist spiralförmig gewickelt. Dadurch besitzt er ein spitzes Ende 9 und eine Einströmseite 10. Der Spalt zwischen den einzelnen Metalldrahtwicklungen 8 bildet Durchflussöffnungen, wobei der Abstand der Spalte geringer ist als der Querschnitt der Verjüngung 3. Dadurch wird gewährleistet, dass nur Partikel 7 den Filter 5 durchströmen können, die einen kleineren Querschnitt als die Verjüngung 3 haben und keine Gefahr für eine Verstopfung darstellen.

Der Filter 5 kann durch geeignete Rast- oder Klemmittel in der Leitung 2 festgelegt werden. Dabei kann der Filter 5 auch in bestehende Systeme nachgerüstet werden, indem dieser einfach in einen Schlauch oder ein Rohr eingesteckt wird.

In dem dargestellten Ausführungsbeispiel ist der Filter 5 als Spiralfeder ausgebildet. Es ist auch möglich, andere Formen einzusetzen, beispielsweise kann der Filter als Topf oder in der Form eines flachen Tellers ausgebildet sein.

### Bezugszeichen

- Haushaltsgerät: 1
- Leitung: 2
- Verjüngung: 3
- Heizeinrichtung: 4
- Filter: 5
- größere Partikel: 6
- kleinere Partikel: 7
- Metalldraht: 8
- spitzes Ende: 9
- Einströmseite: 10

## Patentansprüche

1. Leitung zum Durchleiten von Wasser oder Dampf, insbesondere für ein Haushaltsgerät, mit einer Verjüngung (3), deren Querschnitt kleiner ist als der Querschnitt der Leitung (2) an der Zulaufseite, **dadurch gekennzeichnet dass** in der Leitung (2) an der Zulaufseite ein Filter (5) angeordnet ist, dessen Öffnungen kleiner sind als der Querschnitt der Verjüngung (3).

2. Leitung nach Anspruch 1, **dadurch gekennzeichnet dass** der Filter (5) dauerhaft in der Leitung (2) an der Zulaufseite montiert ist.

3. Leitung nach Anspruch 1 oder 2, **dadurch gekennzeichnet dass** der Filter (5) aus einem Metalldraht gebildet ist.

4. Leitung nach einem der Ansprüche 1 bis 3, **dadurch gekennzeichnet dass** der Filter (5) spiralförmig ausgebildet ist.

5. Leitung nach einem der Ansprüche 1 bis 4, **dadurch gekennzeichnet dass** der Filter (5) kegelförmig in der Leitung angeordnet ist.

6. Leitung nach Anspruch 5, **dadurch gekennzeichnet dass** ein spitzes Ende des Filters (5) in Strömungsrichtung hinten angeordnet ist.

7. Leitung nach einem der Ansprüche 1 bis 6, **dadurch gekennzeichnet dass** der Filter (5) zwischen einer Heizeinrichtung (4) und der Verjüngung (3) angeordnet ist.

8. Leitung nach einem der Ansprüche 1 bis 7, **dadurch gekennzeichnet dass** die Verjüngung (3) als Auslauf eines Getränkeautomaten ausgebildet ist.
